(19) **Europäisches Patentamt European Patent Office Office européen des brevets**

(11) **EP 1 705 359 B1**

(12) **EUROPEAN PATENT SPECIFICATION**

(45) Date of publication and mention
of the grant of the patent:
**08.01.2014 Bulletin 2014/02**

(51) Int Cl.:
*F02D 41/34* (2006.01)    *F02D 41/24* (2006.01)
*F02D 41/18* (2006.01)

(21) Application number: **06110560.7**

(22) Date of filing: **01.03.2006**

(54) **Method of feedforward controlling a multi-cylinder internal combustion engine and relative feedforward fuel injection control system**

Vorwärtsregelungsverfahren einer Mehrzylinder-Brennkraftmaschine und entsprechendes System zur Steuerung der Kraftstoffeinspritzung

Methode de correction précursive d'un moteur à combustion multicylindre et système de correction précursive correspondant de contrôle de l'injection

(84) Designated Contracting States:
**DE FR GB IT**

(30) Priority: **04.03.2005 EP 05425121**

(43) Date of publication of application:
**27.09.2006 Bulletin 2006/39**

(73) Proprietor: **STMicroelectronics S.r.l.**
**20041 Agrate Brianza (MB) (IT)**

(72) Inventors:
• **Taglialatela-Scafati, Ferdinando**
**80014 Giugliano (IT)**
• **Cesario, Nicola**
**80013 Casalnuovo di Napoli (IT)**

• **Carpentieri, Francesco**
**82018 San Giorgio del Sannio (IT)**

(74) Representative: **Pellegri, Alberto et al**
**Società Italiana Brevetti S.p.A.**
**Via Carducci, 8**
**20123 Milano (IT)**

(56) References cited:
**EP-A- 0 589 517     EP-A1- 0 522 908**
**WO-A1-90/15236     DE-A1- 19 653 521**
**DE-A1- 19 835 019     GB-A- 2 397 137**

• **PATENT ABSTRACTS OF JAPAN vol. 2000, no. 25, 12 April 2001 (2001-04-12) & JP 2001 234798 A (HITACHI LTD), 31 August 2001 (2001-08-31)**

## Description

### FIELD OF THE INVENTION

This invention relates to internal combustion engines and more particularly to a method and a relative control system for determining the width (duration) of the fuel injection pulse in each cylinder of a multi-cylinder internal combustion engine.

### BACKGROUND OF THE INVENTION

In the feedforward part of SI (Spark Ignition) engine Air/Fuel control system, the in-cylinder mass air flow rate must be accurately estimated in order to determine the amount of fuel to be injected. Generally, this evaluation is performed either with a dedicated physical sensor (MAF sensor) or more often through an indirect evaluation.

In order to meet the stricter and stricter emission regulations, automobile gasoline engines are equipped with a three way catalytic converter (TWC). A precise control of the air-fuel ratio (A/F) to maintain it as close as possible to the stoichiometric value is necessary to achieve a high efficiency of the TWC converter in the conversion of the toxic exhaust gases (CO, NOx, HC) into less harmful products ($CO_2$, $H_2O$, $N_2$). Typically, in a spark-ignition engine, this control is performed through a so-called lambda sensor. The lambda sensor generates a signal representative of the value of the ratio

$$\lambda = \frac{Air/Fuel}{Air/Fuel_{stoichiometric}}$$

from the amount of oxygen detected in the exhaust gas mixture. If $\lambda < 1$ the mixture is rich of fuel, while if $\lambda > 1$ the mixture is lean of fuel.

In order to keep the air/fuel ratio (AFR) as close as possible to unity, the lambda sensor is introduced in the conduit of exhaust gases for monitoring the amount of oxygen present in the exhaust gas mixture. The signal generated by the lambda sensor is input to the controller of the engine that adjusts the injection times and thus the fuel injected during each cycle for reaching the condition $\lambda = 1$.

Traditional Air/Fuel control systems include a feed-forward part, in which the amount of fuel to be injected is calculated on the basis of the in-cylinder mass air flow, and a feedback part that uses the signal of the oxygen sensor (lambda sensor) in the exhaust gas stream, to ensure that the Air/Fuel remain as close as possible to the stoichiometric value [1].

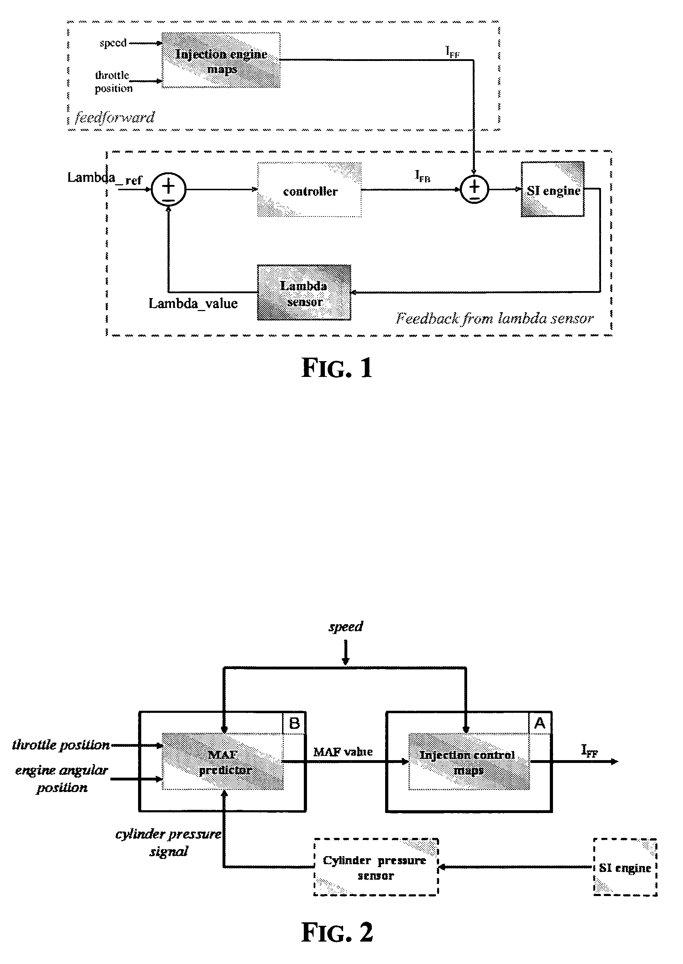

Figure 1 shows a block diagram of a traditional Air/Fuel control system. Generally, the feedback part of the Air/Fuel control system is fully active only in steady-state conditions. Moreover, the lambda sensor signal is made available only after that this sensor has reached a certain operating temperature. In transients and under cold start conditions, the feedback control is disabled, thus the feedforward part of Air/Fuel control becomes particularly important.

As mentioned above, air flow estimation is often the basis for calculating the amount of injected fuel in the feedforward part of Air/Fuel control system.

A conventional technique [1] for estimating a cylinder intake air flow in a SI (Spark Ignition) engine involves the so-called "speed-density" equation:

$$\dot{m}_{ap} = \eta\left(p_m, N\right) \cdot \frac{V_d \cdot N \cdot p_a}{120 \cdot R \cdot T_m}$$

where $\dot{m}_{ap}$ is the inlet mass air flow rate, $V_d$ is the engine displacement and $N$ is the engine speed; $T_m$ and $P_m$ are the average manifold temperature and pressure and $\eta$. is the volumetric efficiency of the engine. This is a nonlinear function of engine speed $(N)$ and manifold pressure $(P_m)$, that may be experimentally mapped in correspondence of different engine working points.

A standard method is to map the volumetric efficiency and compensate it for density variations in the intake manifold.

One of the drawbacks in using the "speed-density" equation for the in-cylinder air flow estimation is the uncertainty in the volumetric efficiency. Generally, the volumetric efficiency is calculated in the calibration phase with the engine under steady state conditions. However variations in the volumetric efficiency due, for example, to engine aging and wear, combustion chamber deposit buildup etc., may introduce errors in the air flow estimation.

The low-pass characteristic of commercial sensors (Manifold Absolute Pressure or MAP sensors) used for the determination of the manifold pressure $p_m$, introduces a delay that, during fast transients, causes significant errors in the air flow determination.

This problem is not solved by using a faster sensor because: in this case the sensor detects also pressure fluctuations due to the valve and piston motion [2].

In engines equipped with an EGR (Exhaust Gas Recirculation) valve, the MAP (Manifold Absolute Pressure) sensor cannot distinguish between fresh air (of known oxygen content) and inert exhaust gas in the intake manifold. Therefore, in this case the speed-density equation (1) cannot be used and the air charge estimation algorithm must provide a method for separating the contribution of recycled exhaust gas to the total pressure in the intake manifold [4].

An alternative method for the air charge determination is to use a dedicated Mass Air Flow (MAF) physical sensor, located upstream the throttle, that directly measures the inlet mass air flow. The main advantages of a direct air flow measurement are [1]:

- automatic compensation for engine aging and for all other factors that modify engine volumetric efficiency;

- improved idling stability;

- lack of sensibility of the system to EGR (Exhaust Gas Recirculation) since only the fresh air flow is measured.

Anyway, air flow measurement by means of a MAF sensor (which is generally a hot wire anemometer) accurately estimates the mass flow in the cylinder only in steady state because during transients the intake manifold filling/empting dynamics play a significant role [3], [5]. Moreover, for commercial automotive applications, the fact that a MAF sensor has a relatively high cost compared to the cost of MAP (Manifold Absolute Pressure) sensor used with the "speed density" evaluation approach, must be accounted for.

DE19653521 discloses a system for controlling fuel injection into each cylinder of a multi-cylinder engine; the fuel to be injected in each cylinder is determined in function of the respective sensed air flow level in the same cylinder.

EP 589 517 discloses a method of predicting air flow into a cylinder of an engine in function of the manifold absolute pressure and of the throttle position. The information about the air flow into a cylinder may be exploited for calculating the amount of fuel to be injected in the same cylinder.

EP 1 619 372 discloses an air intake apparatus and a relative control apparatus for an internal combustion engine, comprising a plurality of air intake passages provided at each cylinder of a multi-cylinder internal combustion engine, and an air flow rate sensor, for measuring air volume being suctioned into a cylinder corresponding to the air intake passage, provided on a part of the insides of the plurality of air intake passages.

WO 90/15236 and EP 522 908 disclose a process for determining a combustion air mass of a cylinder of an internal combustion engine by measuring the air pressure in the combustion chamber at least twice in a same combustion period and by processing the measured values with a polytropic equation of gases.

SUMMARY OF THE INVENTION

Test carried out by the applicants have unexpectedly shown that the amount of fuel to be injected in each cylinder of a multi-cylinder spark ignition internal combustion engine may be determined with enhanced precision if the fuel injection durations are determined in function of the estimated mass air flow in all the cylinders of the engine, instead of considering only the air flow in the same cylinder.

This surprising finding has led the applicants to devise a more efficient method of controlling a multi-cylinder spark ignition internal combustion engine and an innovative feedforward control system.

The novel feedforward control system may be embodied in a feedforward-and-feedback control system of a multi-cylinder spark ignition engine, including also a lambda sensor, that effectively keeps the composition of the air/fuel ratio of the mixture that is injected into the combustion chamber of each cylinder at a pre-established value.

Experimental tests carried out by the applicants demonstrated that the feedforward-and-feedback control system of this invention is outstandingly effective in controlling the engine such to keep the lambda value as close as possible to any pre-established reference value.

The invention is defined in the annexed claims.

BRIEF DESCRIPTION OF THE DRAWINGS

Preferred embodiments of the invention will be described referring to the attached drawings, wherein:

**Figure 1** shows a block diagram of the traditional air/fuel control system for an internal combustion engine;
**Figure 2** is a block diagram of a feedforward injection control system devised by the same applicants;
**Figure 3** shows an injection control system of this invention for an internal combustion engine with N cylinders.

DESCRIPTION OF SEVERAL EMBODIMENTS OF THE INVENTION

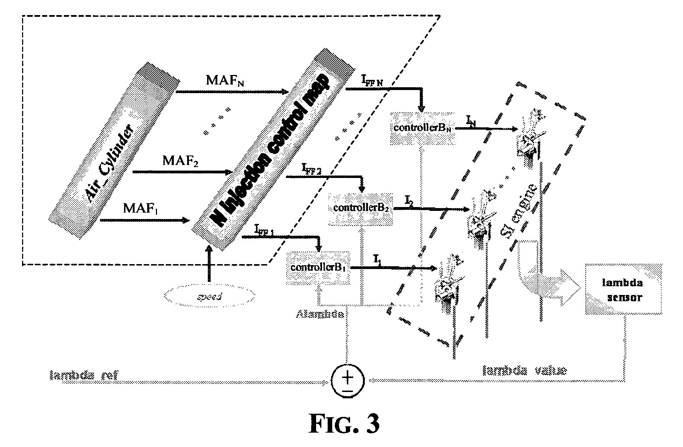

The amount of fuel to be injected in each cylinder of a spark ignition (SI) internal combustion engine having N cylinders is determined by a feedforward fuel injection control system as that surrounded by the broken line perimeter in Figure 3.

The block AIR-CYLINDER generates signals $MAF_1$, ..., $MAF_N$ representative of the Mass Air Flow aspired by each cylinder of the engine. This block may be easily realized by juxtaposing N mass air flow estimators.

The block INJECTION CONTROL MAPS has as inputs the signals $MAF_1$, ..., $MAF_N$ and a signal representing the speed of the engine, and generates in function thereof a feedforward signal $I_{FF1}$, ..., $I_{FFN}$ for each cylinder.

According to an innovative aspect of this invention, each feedforward signal is determined in function of the speed of the engine and of all the Mass Air Flow values $MAF_1$, ..., $MAF_N$ of all the cylinders. The feedforward signals $I_{FF1}$, ..., $I_{FFN}$ are generated in this case by pointing respective locations of a look-up table that is established during a test phase of the engine.

Tests carried out by the applicants have demonstrated that generating each feedforward signal $I_{FFi}$ for a certain cylinder in function of all the mass air flow values detected or estimated for all the cylinders of the engine, enhances the apparent correctness of the composition of the air/fuel mixture that is injected into each cylinder of the engine.

This unpredictable result may be explained by the fact that there is an apparent non-homogeneous air filling for the different cylinders of the engine. This phenomenon is induced by air backflow in the intake manifold and air turbulences. For this reason, even if each cylinder of the engine is maintained nominally to the stoichiometric condition, the global exhaust gas could not have the oxygen content needful to guarantee the maximum efficiency of the three-way catalytic converter. For this reason, it appears that the injected fuel amount for each cylinder of the engine should be dependent not only by the related mass air flow value but also by the mass air flow incoming into the other cylinders.

According to a preferred embodiment of this invention, the amount of fuel to be injected in each cylinder of an internal combustion engine having N cylinders is determined with a feedforward-and-feedback fuel injection control system as depicted in Figure 3.

A lambda sensor, introduced in the outlet conduit of exhaust gases for monitoring the amount of oxygen in the exhaust gases, determines whether the lambda ratio is above or below unity from the amount of oxygen detected in the exhaust gas mixture. The lambda sensor provides a signal representative of the value of the ratio:

$$\lambda = \frac{Air/Fuel}{Air/Fuel_{stoichiometric}}$$

If $\lambda$ < 1 the mixture is rich of fuel, while if $\lambda$ > 1 the mixture is lean of fuel.

The feedback-and-feedforward control system comprises an array of controllers $CONTROLLERB_1$, ..., $CONTROLLERB_N$ each input with a respective feedforward signal $I_{FFi}$ and with an error signal $\Delta LAMBDA$ representing the difference between the actual lambda ratio LAMBDA-VALUE and a reference value LAMBDA-REF. Each controller adjusts the injection duration $I_1$, ..., $I_N$ of a respective cylinder and thus the amount of fuel that is injected during each cycle in the respective cylinder for eventually reach the condition LAMBDA-VALUE=LAMBDA-REF.

The lambda sensor may be preferably a virtual lambda sensor of the type described in the cited prior European Patent application N° 05425121.0.

According to a preferred embodiment of this invention, each controller $CONTROLLERB_i$ is realized using a Fuzzy Inference System properly set in a preliminary calibration phase of the system, according to a common practice.

Each mass air flow estimator is a soft computing mass air flow estimator, of the type disclosed in the European patent application N° 06110557.3 in the name of the same applicants and shown in Figure 2. This estimator is capable of estimating both in steady state and in transient conditions the in cylinder mass air flow of a single-cylinder SI engine, basically using a combustion pressure signal of the cylinder. A learning machine, such as for example a MLP (Multi-Layer Perceptron) neural network, trained on the experimental data acquired in different operating conditions of a gasoline engine, may be used for realizing the inlet mass air flow estimator.

A traditional combustion pressure piezoelectric transducer, or any other low-cost pressure sensor, may provide the required raw information. As disclosed in the cited European Patent application, the cylinder combustion pressure is correlated with the inlet mass air flow of the cylinder, thus a signal produced by a combustion pressure sensor is exploited for producing through a soft-computing processing that utilizes information on throttle opening, speed and angular position, a signal representative of the inlet mass air flow.

## REFERENCES

1. Heywood, J.B., - "Internal combustion engine fundamentals" - McGraw -Hill Book Co., 1988.

2. Barbarisi, O., Di Gaeta, A., Glielmo, L., and Santini, S., "An Extended Kalman Observer for the In-Cylinder Air Mass Flow Estimation", MECA02 International Workshop on Diagnostics in Automotive Engines and Vehicles, 2001.

3. Grizzle, J.W., Cookyand, J.A., and Milam, W.P., "Improved Cylinder Air Charge Estimation for Transient Air Fuel Ratio Control", Proceedings of American Control Conference, 1994.

4. Jankovic, M., Magner, S.W., "Air Charge Estimation and Prediction in Spark Ignition Internal Combustion Engines", Proceedings of the American Conference, San Diego, California, June 1999.

5. Stotsky, I., Kolmanovsky, A., "Application of input estimation and control in automotive engines" Control Engineering Practice 10, pp. 1371-1383, 2002.

## Claims

1. A feedforward control system of a multi-cylinder internal combustion engine adapted to generate feedforward signals representing durations of fuel injection ($I_{FF}$) of each cylinder of the engine, comprising

a plurality of mass air flow estimators, each adapted to generate a mass air flow signal

(MAF$_1$, ..., MAF$_N$) representative of the intake mass air flow of the respective cylinder of said engine,

a single logic unit (N INJECTION CONTROL MAP) input with said mass air flow signals (MAF$_1$, ..., MAF$_N$), adapted to generate each of said feedforward signals of level corresponding to the level established in a look-up table for the current speed of the engine and said mass air flow signals,

wherein each of said mass air flow estimators is an estimator of inlet air flow in a combustion chamber of a cylinder of an internal combustion engine, comprising:

> a pressure sensor generating a pressure signal of the pressure in at least said combustion chamber of a cylinder of the engine; an off-line trained soft-computing learning machine input at least with said cylinder pressure signal, generating a signal representative of the inlet air flow in said combustion chamber of said engine in function of characteristic parameters thereof and of said characteristic parameters of the pressure signal.

2. A feedforward-and-feedback control system of a multi-cylinder internal combustion engine, comprising:

> a feedforward control system of claim 1 generating feedforward signals representing durations of fuel injection (I$_{FF}$) of each cylinder of the engine; a lambda sensor (LAMBDA SENSOR) generating a signal representing the air/fuel ratio of said engine; a plurality of feedback controllers (CONTROLLERB), one for each cylinder, each generating a fuel injection control signal of a respective cylinder of said engine (I$_1$, ..., IN) in function of the difference between the signal (LAMBDA_VALUE) output by the lambda sensor (LAMBDA SENSOR) and a reference value (LAMBDA_REF), in order to nullify said difference.

3. The feedforward-and-feedback control system of claim 2, wherein each of said controllers (CONTROLLERB) is composed of a Fuzzy Inference System set in a calibration phase of the system.

4. A method of feedforward controlling a multi-cylinder internal combustion engine adapted to generate feedforward signals representing durations of fuel injection (I$_{FF}$) of each cylinder of the engine, comprising the steps of generating mass air flow signals representative of the estimated inlet air flow of each cylinder of said engine;

generating each of said feedforward signals of level corresponding to the level established in a look-up table for the current speed of the engine and said mass air flow signals;

wherein each of said mass air flow signals is generated by:

> preliminarily, providing a soft-computing learning machine for generating an output signal in function of at least an input signal; training said learning machine for reproducing the functioning of a mass air flow estimator; sensing the pressure in a combustion chamber of a respective cylinder of the engine, generating a respective cylinder pressure signal; extracting characteristic parameters of said pressure signal; generating each of said signals representative of the inlet air flow in function of said characteristic parameters using said trained learning machine.

5. The method of claim 4, wherein said learning machine is input with signals representing the position of a throttle of the engine, the speed of the engine, the angular position of the drive shaft of the engine and with said cylinder pressure signal.

**Patentansprüche**

1. Vorwärtsregelungssystem eines Mehrzylinderverbrennungsmotors, das eingerichtet ist, Vorwärtssignale zu erzeugen, die die Dauer einer Kraftstoffeinspritzung (I$_{FF}$) jedes Zylinders des Motors repräsentieren, das aufweist mehrere Luftmassenstromschätzer, die jeweils eingerichtet sind, ein Luftmassenstromsignal (MAF$_1$, ..., MAF$_N$) zu erzeugen, das für den Ansaugluftmassenstrom des jeweiligen Zylinders des Motors repräsentativ ist,

eine einzelne Logikeinheit (N INJECTION CONTROL MAP), in die die Luftmassenstromsignale (MAF$_1$, ..., MAF$_N$) eingegeben werden, die eingerichtet ist, jedes der Vorwärtssignale mit einem Pegel zu erzeugen, der dem Pegel entspricht, der in einer Nachschlagtabelle für die gegenwärtige Drehzahl des Motors und die Luftmassenstromsignale festgelegt ist, wobei jeder der Luftmassenstromschätzer ein Schätzer eines Ansaugluftstroms in eine Brennkammer eines Zylinders eines Verbrennungsmotors ist, der aufweist:

> einen Drucksensor, der ein Drucksignal des Drucks in mindestens der Brennkammer eines Zylinders des Motors erzeugt; eine offline trainierte lernende Soft-Computing-Maschine, in die mindestens das Zylinderdrucksignal eingegeben wird, die ein Signal, das für den Ansaugluftstrom in die Brennkammer des Motors repräsentativ ist, als Funktion seiner charakteristischen Parameter und der charakteristischen Parameter des Drucksignals erzeugt.

2. Vor- und Rückkopplungsregelungssystem eines Mehrzylinderverbrennungsmotors, das aufweist:

ein Vorwärtsregelungssystem nach Anspruch 1, das Vorwärtssignale erzeugt, die die Dauer einer Kraftstoffeinspritzung ($I_{FF}$) jedes Zylinders des Motors repräsentieren;
eine Lambdasonde (LAMBDA SENSOR), die ein Signal erzeugt, das das Luft/Kraftstoff-Verhältnis des Motors repräsentiert;
mehrere Rückkopplungsregler (CONTROLLERB), einen für jeden Zylinder, die jeweils ein Kraftstoffeinspritzungssteuersignal eines jeweiligen Zylinders des Motors ($I_1$, ..., IN) als Funktion der Differenz zwischen dem Signal (LAMBDA_VALUE), das durch die Lambdasonde (LAMBDA SENSOR) ausgegeben wird, und einem Referenzwert (LAMBDA_REF) erzeugen, um die Differenz auf null zu bringen.

3. Vor- und Rückkopplungsregelungssystem nach Anspruch 2, wobei jeder der Regler (CONTROLLERB) aus einem Fuzzy Inference System besteht, das in einer Kalibrierungsphase des Systems eingestellt wird.

4. Verfahren zum Vorwärtsregeln eines Mehrzylinderverbrennungsmotors, das eingerichtet ist, Vorwärtssignale zu erzeugen, die die Dauer einer Kraftstoffeinspritzung ($I_{FF}$) jedes Zylinders des Motors repräsentieren, das die Schritte aufweist:

Erzeugen von Luftmassenstromsignalen, die für den geschätzten Ansaugluftstrom jedes Zylinders des Motors repräsentativ sind;
Erzeugen der Vorwärtssignale mit einem Pegel, der dem Pegel entspricht, der in einer Nachschlagtabelle für die gegenwärtige Drehzahl des Motors und der Luftmassenstromsignale festgelegt ist;
wobei jedes der Luftmassenstromsignale erzeugt wird durch:

vorbereitendes Bereitstellen einer lernenden Soft-Computing-Maschine zum Erzeugen eines Ausgangssignals als Funktion mindestens eines Eingangssignals;
Trainieren der lernenden Maschine zum Reproduzieren der Funktion eines Luftmassenstromschätzers;

Abtasten des Drucks in einer Brennkammer eines jeweiligen Zylinders des Motors, wobei ein jeweiliges Zylinderdrucksignal erzeugt wird;
Extrahieren charakteristischer Parameter des Drucksignals;
Erzeugen jedes der Signale, das für den Ansaugluftstrom repräsentativ ist, als Funktion der charakteristischen Parameter mittels der trainierten lernenden Maschine.

5. Verfahren nach Anspruch 4, wobei in die lernende Maschine Signale, die die Position einer Drosselklappe des Motors, die Drehzahl des Motors, die Winkelposition der Antriebswelle des Motors repräsentieren, und das Zylinderdrucksignal eingegeben werden.

## Revendications

1. Système de commande à action directe d'un moteur à combustion interne à cylindres multiples, adapté à générer des signaux à action directe représentant des durées d'injection de carburant ($I_{FF}$) de chaque cylindre du moteur, comprenant
une pluralité d'estimateurs de débit massique d'air, chacun étant adapté à générer un signal de débit massique d'air ($MAF_1$, ..., $MAF_N$) représentatif du débit massique d'air d'admission du cylindre respectif du moteur,
une seule unité logique (N INJECTION CONTROL MAP) recevant en entrée les signaux de débit massique d'air ($MAF_1$, ..., $MAF_N$), adaptée à générer chacun des signaux à action directe à un niveau correspondant au niveau établi dans une table de correspondance pour la vitesse courante du moteur et les signaux de débit massique d'air,
dans lequel chacun des estimateurs de débit massique d'air est un estimateur de débit d'air entrant dans une chambre de combustion d'un cylindre d'un moteur à combustion interne, comprenant :

un capteur de pression générant un signal de pression indiquant la pression dans au moins ladite chambre de combustion d'un cylindre du moteur ;
une machine à apprentissage à calcul logiciel formée hors ligne, recevant en entrée au moins le signal de pression de cylindre, générant un signal représentatif du flux d'air entrant dans la chambre de combustion du moteur en fonction de paramètres caractéristiques de celui-ci et de paramètres caractéristiques du signal de pression.

2. Système de commande à action directe et à rétroaction d'un moteur à combustion interne à cylindres multiples, comprenant :

un système de commande à action directe selon la revendication 1, générant des signaux à action directe représentant des durées d'injection de carburant ($I_{FF}$) de chaque cylindre du moteur ;

un capteur lambda (LAMBDA SENSOR) générant un signal représentant le rapport air/carburant du moteur ;

une pluralité de contrôleurs de rétroaction (CONTROLLERB), un pour chaque cylindre, générant chacun un signal de commande d'injection de carburant d'un cylindre respectif du moteur ($I_1$, ..., $I_N$) en fonction de la différence entre le signal (LAMBDA_VALUE) fourni par le capteur lambda (LAMBDA SENSOR) et d'une valeur de référence (LAMBDA_REF), afin d'annuler la différence.

3. Système de commande à action directe et à rétroaction selon la revendication 2, dans lequel chacun des contrôleurs (CONTROLLERB) est constitué d'un Système d'Inférence à Logique Floue réglé dans une phase d'étalonnage du système.

4. Procédé pour une commande à action directe d'un moteur à combustion interne à cylindres multiples, adapté à générer des signaux à action directe représentant des durées d'injection de carburant ($I_{FF}$) de chaque cylindre du moteur, comprenant les étapes suivantes :

générer des signaux de débit massique d'air représentatifs du débit d'air entrant estimé de chaque cylindre du moteur ;

générer chacun des signaux à action directe à un niveau correspondant au niveau établi dans une table de correspondance pour la vitesse courante du moteur et les signaux de débit massique d'air ;

dans lequel chacun des signaux de débit massique d'air est généré :

de façon préliminaire, en prévoyant une machine à apprentissage à calcul logiciel pour générer un signal de sortie en fonction d'au moins un signal d'entrée ;

en formant la machine à apprentissage pour reproduire le fonctionnement d'un estimateur de flux massique d'air ;

en détectant la pression dans une chambre de combustion d'un cylindre respectif du moteur, générant un signal de pression de cylindre respectif ;

en extrayant des paramètres caractéristiques du signal de pression ;

en générant chacun des signaux représentatifs du flux d'air entrant en fonction des paramètres caractéristiques en utilisant la machine à apprentissage formée.

5. Procédé selon la revendication 4, dans lequel la machine à apprentissage reçoit en entrée des signaux représentant la position d'un papillon des gaz du moteur, la vitesse du moteur, la position angulaire de l'arbre de transmission du moteur, et le signal de pression du cylindre.

EP 1 705 359 B1

**FIG. 1**

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19653521
- EP 589517 A
- EP 1619372 A
- WO 9015236 A
- EP 522908 A
- EP 05425121 A
- EP 06110557 A

### Non-patent literature cited in the description

- **HEYWOOD, J.B.** Internal combustion engine fundamentals. McGraw -Hill Book Co, 1988
- **BARBARISI, O. ; DI GAETA, A. ; GLIELMO, L. ; SANTINI, S.** An Extended Kalman Observer for the In-Cylinder Air Mass Flow Estimation. *MECA02 International Workshop on Diagnostics in Automotive Engines and Vehicles,* 2001
- **GRIZZLE, J.W. ; COOKYAND, J.A. ; MILAM, W.P.** Improved Cylinder Air Charge Estimation for Transient Air Fuel Ratio Control. *Proceedings of American Control Conference,* 1994
- **JANKOVIC, M. ; MAGNER, S.W.** Air Charge Estimation and Prediction in Spark Ignition Internal Combustion Engines. *Proceedings of the American Conference, San Diego, California,* June 1999
- **STOTSKY, I. ; KOLMANOVSKY, A.** Application of input estimation and control in automotive engines. *Control Engineering Practice,* 2002, vol. 10, 1371-1383